# EUROPEAN PATENT SPECIFICATION

(11) **EP 1 647 766 B1**
(45) Date of publication and mention of the grant of the patent: **06.04.2011**
(21) Application number: 05022343.7
(22) Date of filing: 13.10.2005
(51) Int. Cl.: F21V 29/02, F21Y 101/02

(54) **Light emitting device package and back light unit for liquid crystal display using the same**
Gehäuse mit Beleuchtungsvorrichtung und Rückbeleuchtungseinheit für eine LCD Anzeige, die dieses Gehäuse enthält
Boîtier de dispositif émetteur de lumière et unité d'éclairage arrière pour afficheur à cristaux liquides utilisant un tel boîtier

(30) Priority: 15.10.2004 KR 2004082872
(43) Date of publication of application: 19.04.2006
(73) Proprietor: LG Electronics Inc., Seoul 150-721 (KR)
(72) Inventor: Lee, Seung Min, 506-1005, Jinsan Mauel, Yongin-si Gyeonggi-do 449-564 (KR); Jang, Jun Ho, Dongan-gu Anyang-si Gyeonggi-do 431-753 (KR); Lee, Tae Hee, Jung-gu Seoul 100-779 (KR)
(74) Representative: Beyer, Andreas

(56) References cited:
- EP-A- 1 408 476
- JP-A- 6 202 566
- US-A- 4 729 076
- US-A- 5 857 767
- US-A1- 2004 120 152
- US-A1- 2004 184 284

## Description

### BACKGROUND OF THE INVENTION

### Field of the Invention

The present invention relates to a light emitting device package.

### Description of the Prior Art

In general, the light emitting diode (LED) is a device for transforming electricity to light by utilizing a theory that, if a current is made to flow in a forward direction in a junction comprising two different semiconductors, electrons and holes are coupled at a junction region to generate a light beam. The said LED has an advantage in that it is resistant to shock, and has an almost eternal life time under a specific condition.

An LED exceeding an incandescent lamp has been currently developed. Furthermore, efforts have been recently waged to use an LED of high efficiency as a lighting apparatus. However, the said LED does not match the efficiency of fluorescent light and it does not seem to be that easy to outperform the efficiency of the fluorescent light within a short period of time.

Although the efficiency of LED does not match that of the fluorescent light, the LED contains no mercury causing an environmental pollution as in the fluorescent light such that studies on the LED are briskly progressed in terms of protection of environments.

Typically, the light source providing back-illumination (backlight unit. BLU) to liquid crystal display (LCD) devices is a Cold Cathode Fluorescent Light (CCFL). However, the CCFL contains mercury and is not a white light, exposing a limit in color expression of crystal display.

Meanwhile, although the LED is a monochromatic light source, and if three red, green and blue LEDs are combined, a variety of color temperatures can be expressed to make an excellent LED.

One of the drawbacks of LED is that efficiency drops and lifetime dramatically shortens if temperature of elements, particularly the temperature at a junction is increased to a prescribed level by heat generated by optical transformation process. Therefore, it should be imperative that LED be kept in an operating temperature under 90 degrees Celsius because its weakness to increase in temperature. However, heat radiation efficiency or density becomes decreased because the heat flow from high temperature to low temperature is in proportion to the temperature difference. For that reason, a particular heat radiation design is required for high efficiency lighting or application of LED for backlight unit.

Particularly, in case of a light source providing backlight unit to LCD using LED, the strong point of LCD that it is thin and light should be made the most of, such that it is necessary to design a heat radiation system to meet these conditions. In order to meet a luminance level required by an LCD of over 20 inches under the current element efficiency level, a heat radiation capacity of over 300W/m² is required.

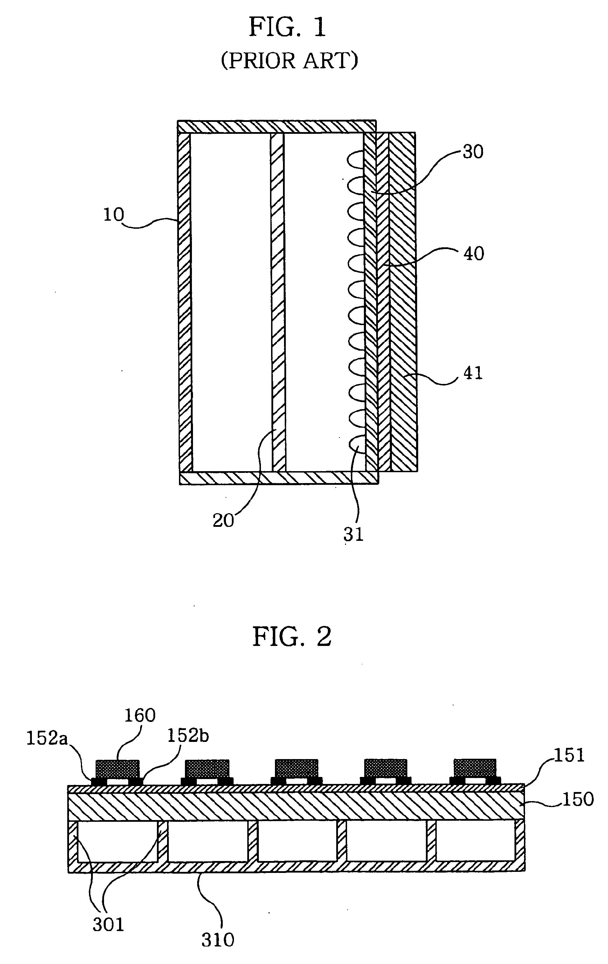

FIG.1 is a schematic cross-sectional view of a backlight unit disposed at an LCD according to the prior art. Reference numeral 10 is an LCD. A dissipation sheet (20) is disposed at a rear surface of the LCD (10). At the rear surface of the dissipation sheet (10) there is positioned a substrate (30) and in front of the substrate (30) there is arrayed a plurality of LEDs (31). The substrate (31) is attached at the rear surface thereof with a rear surface sheet (40), and at the rear surface of the rear surface sheet (40) there is mounted a plurality of cooling fins (41).

The plurality of LEDs is a backlight source of the LCD (10) and the rear surface sheet (40) formed with the cooling fins (41) is cooling means for cooling the backlight source.

The LCD of a backlight unit using the LEDs according to the prior art can radiate approximately 8~9W/m²K even only with the thermal radiation and natural convection. However, the luminance required by a large display device is accompanied by a problem of heat generation four times that of the prior art, bring about a problem of the temperature of the rear surface sheet rising to almost 70 degrees Celsius if the ambient temperature is 30 degrees Celsius.

US 5,857,767 relates to a method of manufacturing an electrically driven L.E.D. lamp assembly comprising the steps of screen printing an electrically insulating coating which can be of less than two hundred microns thickness over an electrically and thermally conductive heat sink, i.e., aluminum, and printing circuit traces of a resin with metal dispersed therein in end to end relationship on the routes of insulating coating to establish discrete and electrically conductive paths for electrically interconnecting light emitting diodes. The light emitting diodes are adhesively secured to the ends of adjacent circuit traces with an electrically conductive adhesive comprising an organic polymeric material compounded with a metal.

US 2004/0120152 A1 refers to an L.E.D. lighting fixture. The lighting fixture comprises at least one heat transfer mounting bar, at least one emitter plate secured to the mounting bar, and an array of L.E.D. lights secured to each emitter plate. A method for providing light is also provided.

### Summary of the Invention

The present invention is disclosed to solve the aforementioned problems and it is an object of the present invention to provide a light emitting device (LED) package adapted to forcibly cool the LED package by using a fan and to increase a heat radiation efficiency and to prevent degradation of the device.

An LED package according to the present invention is defined by the independent claim.

Preferred embodiments of the LED package according to the present invention are defined by the dependent claims.

### Brief Description of the Drawings

The above objects and other advantages of the present invention will become more apparent by describing in detail preferred embodiments and exemplary embodiments with reference to the attached drawings in which:
FIG.1 is a schematic cross-sectional view of a backlight unit disposed at an LCD according to the prior art;
FIG.2 is a schematic perspective view of LED package according to the present invention;
FIG.3 is a schematic perspective view of routes in which heat is generated from the LED package according to the present invention;
FIG.4 is a schematic block diagram for illustrating of air being circulated in a LED package further disposed with additional FIG.4 is a schematic block diagram for illustrating of air being circulated in a LED package further disposed with additional components according to the present invention;
FIGS. 5a and 5b are schematic cross-sectional views for describing formation of protruders on a metal substrate or a guide member according to the present invention;
FIG.6 is a conceptual view of airflow where a fan case is further disposed for discharging air according to the present invention;
FIG.7 is a schematic constitutional cross-sectional view of a back light unit for LCD useful for understanding the present invention;
FIGS. 8a and 8b are schematic constitutional cross-sectional views of layouts of a suction inlet formed at a cooling apparatus of a back light unit useful for understanding the present invention;
FIG.9 is a schematic perspective view of a cooling apparatus mounted at a back light unit useful for understanding the present invention;
FIG.10 illustrates a graph of measurement of a cooling efficiency of forcibly cooling a back light unit using a fan useful for understanding the present invention; and
FIG.11 illustrates a graph of measurement of temperature changes of each part based on airflow according to the present invention.

### Detailed Description of the Invention

Preferred embodiments of the present invention and exemplary embodiments useful for understanding the present invention will now be described in detail with reference to the accompanying drawings.

FIG.2 is a schematic perspective view of LED package according to the present invention.

The LED package comprises: a metal substrate (150); an insulation sheet (151) formed at an upper surface of the metal substrate (150); a plurality of electrode lines (152a. 152b) formed on the insulation sheet (151); LEDs (160) electrically bonded to an upper surface of the plurality of electrode lines (152a. 152b) and arrayed in rows and lines; a plurality of striped protruders (301) fixed at one surface thereof to a lower surface of the metal substrate, each spaced a predetermined distance apart; and a guide member (310) fixed to the other surface of the protruders (301).

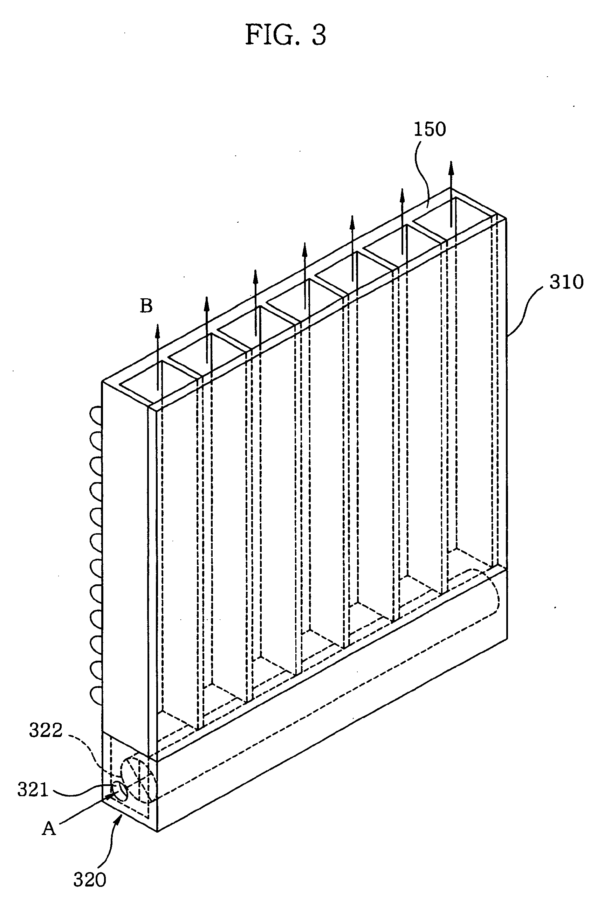

Referring to FIG.3, the LED package is mounted therein with a fan (322) for sucking air through a suction inlet (321) and is further disposed with a fan case (320) encased therein with the fan (322) for sucking air through a suction inlet (321) and disposed at a lateral surface of the metal substrate (150) and the guide member (301) for circulating the sucked air through spaces of the protruders (301). Preferably, the fan (322) is a cross flow fan.

LED package thus constructed is such that the fan (322) is operated to suck the air through the suction inlet (321), and the sucked air is circulated among the spaces of the protruders (301) to forcibly cool the heat generated by the LEDs (160), thereby improving the cooling efficiency and preventing the degradation of the devices.

At this time, the heat generated by the LEDs (160) is transmitted to the metal substrate (150) and cooled by the air circulated along the bottom surface of the metal substrate (150).

Now, referring to FIG.3, the air sucked in the 'A' direction through the suction inlet (321) of the fan case (320) serves to cool the metal substrate (150) and is discharged in the 'B' direction.

Furthermore, the heat eradiated from the metal substrate (150) is also transmitted to the protruders (301) which in turn are cooled by the contacted air to carry out the fin function.

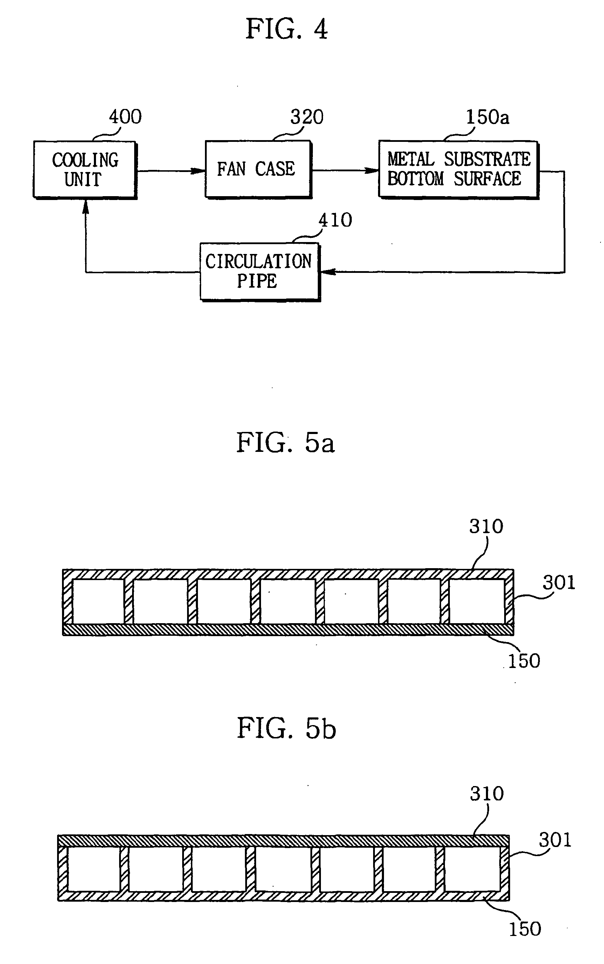

FIG.4 is a schematic block diagram for illustrating of air being circulated in a LED package further disposed with additional components according to the present invention, where the air sucked by the fan of the fan case (320) is the air cooled by a cooling unit (400), and the cooled air flows along a bottom surface (150a) of the metal substrate to further enhance the radiating effect of the LED package.

In other words, preferably, the LED package of FIGS. 2 and 3 is further disposed with the cooling unit (400) for cooling the air and supplying the cooled air to the suction inlet of the fan case (320). Preferably, a circulation pipe (410) is further mounted for supplying to the cooling unit (400) the air which has flowed along the bottom surface (150a) of the metal substrate and then is discharged. Of course, the cooling unit (400) and the suction inlet of the fan case (320) are connected via a pipe such that the cooled air of the cooling unit (400) is introduced into the suction inlet of the fan case via the pipe.

FIGS. 5a and 5b are schematic cross-sectional views for describing formation of protruders on a metal substrate or a guide member according to the present invention. The metal substrate (150) of FIG.5a is etched to form the protruders (301), and the protruders (301) and the metal substrate (150) are integrally formed. The guide member (310) and the protruders (301) of FIG.5b are integrally formed.

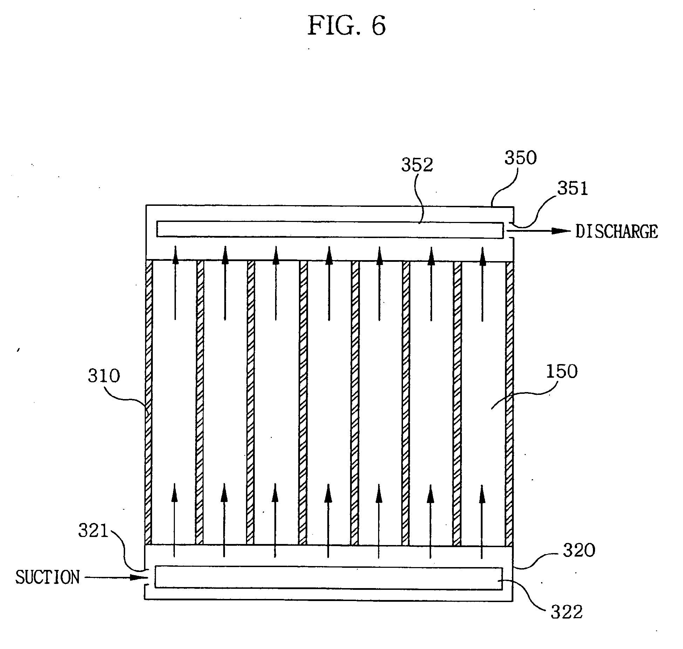

FIG.6 is a conceptual view of airflow where a fan case is further disposed for discharging air according to the present invention, where the metal substrate (150) is mounted thereunder with the fan case (320) for air suction, and the metal substrate (150) is formed thereon with a fan case (450)for discharging the air.

In other words, the fan (322) of the fan case (320) for sucking the air serves to facilitate the suction of the air via the suction inlet (321), and the fan (352) of the fan case (350) functions to facilitate the discharge of the air via a discharge outlet (351). The air swiftly flows along the metal substrate (150) by the fan (322) of the fan case (350) for discharge of the air to cool the metal substrate (150) more efficiently.

Meanwhile, an LED package according to the present invention comprises: a body arrayed thereon with LEDs and formed thereunder with a plurality of striped protruders, each spaced a predetermined distance apart; and a suction fan infusing air through spaces of the plurality of protruders for cooling a lower section of the body and the plurality of protruders by sucking the air. Furthermore, the suction fan is formed at one lateral surface of the body, and is formed at the other lateral surface of the body with a discharge fan for sucking the air introduced through the plurality of protruders.

Preferably, the suction fan, the plurality of protruders and the discharge fan are hermetically sealed from the outside so that the air sucked from the suction fan is discharged via the plurality of protruders by the discharge fan and again sucked by the suction fan.

Between the suction fan and the discharge fan, there is further mounted a cooling unit for cooling the air discharged by the discharge fan and for supplying the cooled air to the suction fan.

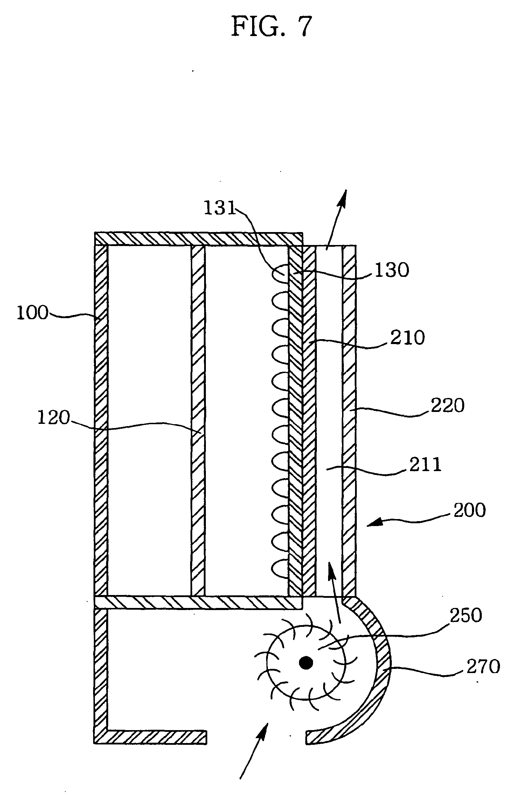

FIG.7 is a schematic constitutional cross-sectional view of a back light unit for LCD useful for understanding the present invention.

The back light unit for liquid crystal display (LCD.100) using LEDs comprising: a dissipation sheet (120) disposed at a rear surface of the LCD (100) having a front surface and a rear surface; a substrate (130) disposed at a rear surface of the dissipation sheet (120) and arrayed at a front thereof with a plurality of LEDs (131); and a cooling apparatus (200) cooling the substrate (130) by discharging the air sucked by a fan (250) to a rear surface of the substrate (130).

The back light unit useful for understanding the present invention serves to forcibly cool the substrate (130) on which a plurality of LEDs (131) are arranged by sucking the air with the fan (250). The substrate (130) is made of metal and enhances the radiation efficiency of heat generated by the LEDs (131).

The cooling unit (200) comprises: a back surface sheet (210) attached at one side thereof to a rear surface of the substrate (130) where the plurality of LEDs (131) are frontally arranged and protruded at the rear surface thereof with a plurality of fins (211) each spaced at a predetermined distance apart; a guide member (220) attached to a distal end of the plurality of pins (211) and forming spaces among the pins; the fan (250) disposed underneath the substrate (130) for discharging the air sucked through the back surface sheet (210) and the guide member (220); and a fan case (270) fixed underneath the LCD (100) and the guide member (220) and having a suction inlet for sucking the air and mounted therein with the fan (250).

Preferably, the plurality of fins (211), the back surface sheet (210) and the guide member (220) are made of metal for enhancing the cooling efficiency.

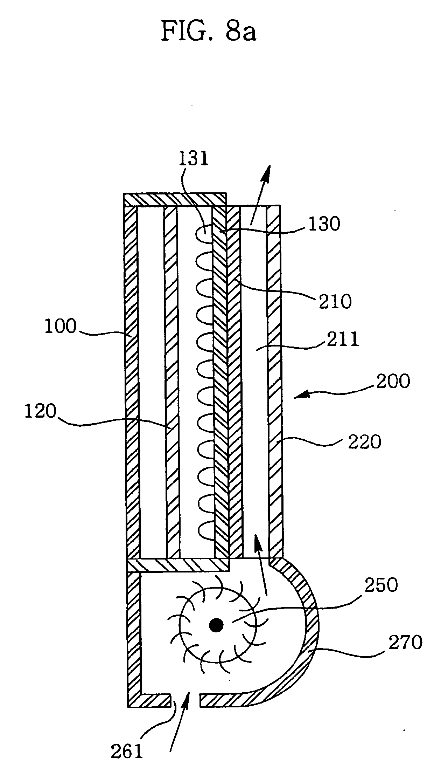

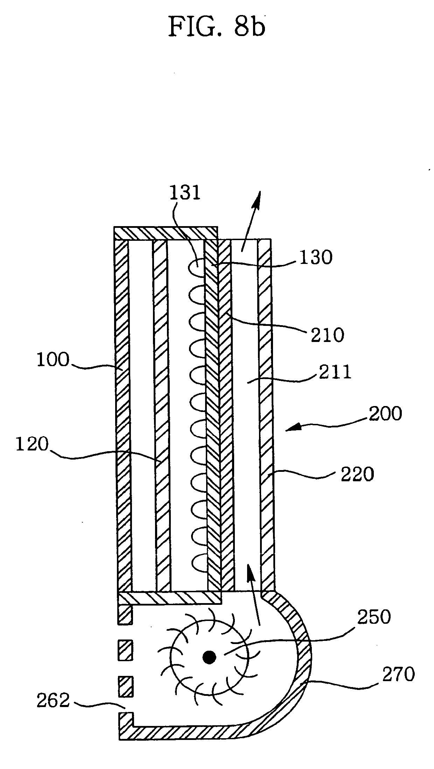

FIGS. 8a and 8b are schematic constitutional cross-sectional views of layouts of a suction inlet formed at a cooling apparatus of a back light unit useful for understanding the present invention.

Referring to FIG. 8a, a suction inlet (261) of the cooling unit (200) is formed underneath the fan case (270), or as illustrated in FIG.8b, a suction inlet (262) is formed at a front surface of the fan case (270) which is in parallel with a front surface of the LED (100).

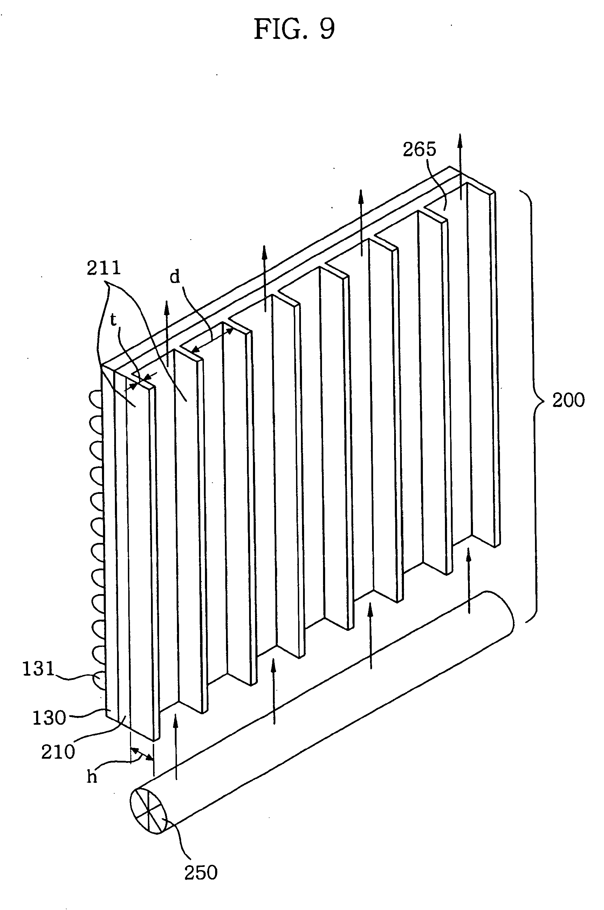

FIG.9 is a schematic perspective view of a cooling apparatus mounted at a back light unit useful for understanding the present invention. The back surface sheet (210) disposed at the cooling apparatus (200) of the back light unit according to the present invention is attached to a rear surface of the substrate (130) on which the plurality of LEDs (131) are frontally arranged.

Furthermore, the distal end of the plurality of fins (211) formed at the back surface sheet (210) is attached with a guide member, and there are formed spaces among the pins.

If the fan (250) disposed underneath the substrate (130) charges the sucked air among the back surface sheet (210) and the guide member (220), the sucked air passes the spaces formed by the fins along the back surface sheet (210) and is discharged outside via a discharge outlet (265).

Preferably, the fan is a cross flow fan. In other words, the cross flow fan makes less noise than an axial flow fan but produces a larger amount of airflow such that the cross flow fan is adopted for the present invention.

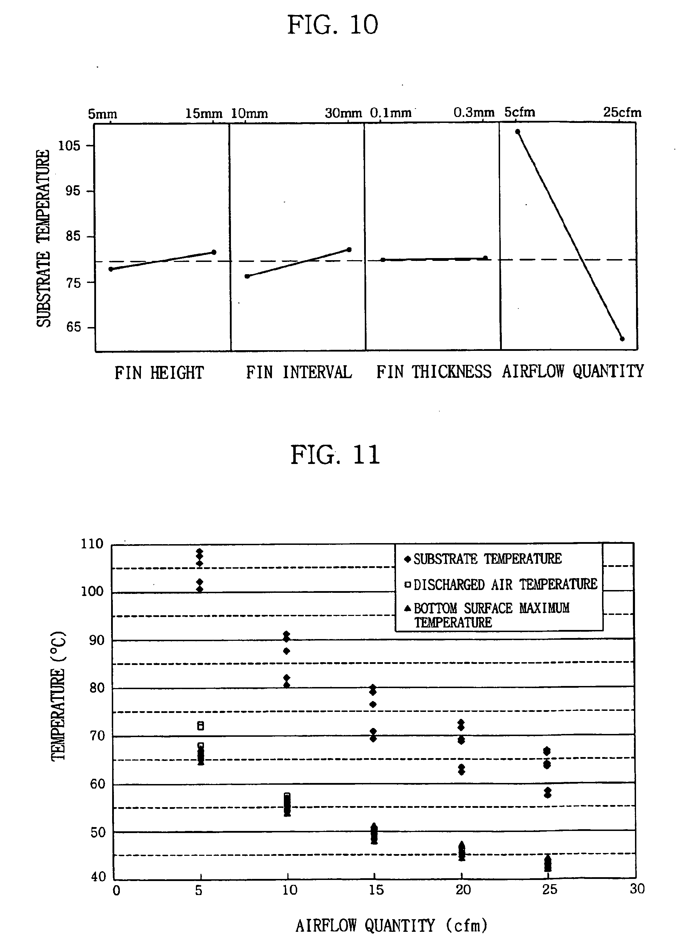

FIG.10 illustrates a graph of measurement of a cooling efficiency of forcibly cooling a back light unit using a fan useful for understanding the present invention.

Referring back to FIG. 9, first of all, substrate temperature rises as fin height (h) and gap (d) are increased. Although increase and decrease of the fin thickness (T) do not affect the substrate temperature, the increase of the airflow at the fan can decrease the substrate temperature remarkably.

Subsequently, it can be noticed that a structure of the fan being used to forcibly cool the air increases the cooling efficiency as against the conventional art where the fin is used to cool the back light unit.

FIG.11 illustrates a graph of measurement of temperature changes of each part based on airflow according to the present invention.

Referring to FIG.11, the substrate temperature frontally arranged with the plurality of LEDs, the air temperature discharged by the discharge outlet and the maximum temperature of the back surface sheet decrease as the airflow increases.

In other words, it should be apparent that if the air is forcibly cooled using the fan, the cooling efficiency of the back light unit can be increased.

For reference, the heat radiation amount of the back light unit in the graph is 680W/m², and the reason data value of each part is distributed to several pieces relative to each airflow is that measurements have been conducted by moving relevant parts.

As apparent from the foregoing, there is an advantage in the light emitting device (LED) package according to the present invention in that the fan is used to forcibly cool the LED package to increase the heat radiation efficiency and to prevent the degradation of the device.

While the present invention has been described in detail, it should be understood that various changes, substitutions and alterations can be made hereto without departing from the scope of the invention as defined in the claims by persons skilled in the art.

## Claims

1. An LED package having a metal substrate (150), an insulation sheet (151) formed at an upper surface of the metal substrate (150), a plurality of electrode lines (152a, 152b) formed on the insulation sheet (151), LEDs (160) electrically bonded to an upper surface of the plurality of electrode lines (152a, 152b) and arrayed in rows and lines and a plurality of striped protruders (301) fixed at one surface thereof to a lower surface of the metal substrate (150), each spaced a predetermined distance apart,
**characterized by**
a guide member (310) fixed to the other surface of the protruders (301);
a fan case (320) encased therein with a fan for sucking air through a suction inlet and disposed at a lateral surface of the metal substrate and the guide member for circulating the sucked air through spaces of the protruders (301);
a cooling unit (400) for cooling air and for supplying the cooled air to the suction inlet of the fan case (320); and
a circulation pipe for supplying the air discharged from spaces among the plurality of protruders (301) to the cooling unit (400).

2. The LED package as defined in claim 1, wherein the fan is a cross flow fan.

3. The LED package as defined in claim 1, wherein the metal substrate (150) and the protruders (301) are integrally formed.

4. The LED package as defined in claim 1, wherein the guide member (310) and the protruders (301) are integrally formed.

## Patentansprüche

1. LED-Baugruppe mit einer Metallbasisplatte (150), einer auf einer oberen Oberfläche der Metallbasisplatte (150) ausgebildeten Isolationslage (151), mehreren auf der Isolationslage (151) gebildeten Elektrodenleitungen (152a, 152b), elektrisch mit einer Oberseite der mehreren Elektrodenleitungen (152a, 152b) verbundenen LEDs (160), die in Spalten und Zeilen angeordnet sind, und mehreren streifenförmigen Vorsprüngen (301), die an einer Seite derselben an einer Unterseite der Metallbasisplatte (150) befestigt sind und jeweils einen vorbestimmten Abstand voneinander aufweisen,
**gekennzeichnet durch**
- ein Führungsbauteil (310), das an der anderen Seite der Vorsprünge (310) befestigt ist,
- ein darin eingeschlossenes Lüftergehäuse (320) mit einem Lüfter, der Luft **durch** einen Saugeinlass ansaugt und an einer Seitenfläche der Metallbasisplatte und des Führungsbauteils angeordnet ist, um die angesaugte Luft **durch** Kammern der Vorsprünge (301) zu zirkulieren,
- eine Kühleinheit (400) zum Kühlen von Luft und zum Liefern der gekühlten Luft zu dem Saugeinlass des Lüftergehäuses (320), und
- ein Zirkulationsrohr zum Liefern der aus den Kammern zwischen den mehreren Vorsprüngen (301) ausgestoßenen Luft zu der Kühleinheit (400).

2. LED-Baugruppe nach Anspruch 1, bei der der Lüfter ein Querstromlüfter ist.

3. LED-Baugruppe nach Anspruch 1, bei der die Metallbasisplatte (150) und die Vorsprünge (301) einstückig ausgebildet sind.

4. LED-Baugruppe nach Anspruch 1, bei der das Führungsbauteil (310) und die Vorsprünge (301) einstückig ausgebildet sind.

## Revendications

1. Boîtier de LED ayant un substrat métallique (150), une feuille d'isolation (151) formée au niveau d'une surface supérieure du substrat métallique (150), une pluralité de lignes d'électrodes (152a, 152b) formées sur la feuille d'isolation (151), des LED (160) électriquement liées à une surface supérieure de la pluralité de lignes d'électrodes (152a, 152b) et regroupées en rangées et colonnes et une pluralité de saillies striées (301) fixées au niveau d'une surface de celles-ci à une surface inférieure du substrat métallique (150), chacune espacée d'une distance prédéterminée,
**caractérisé par**
un élément guide (310) fixé à l'autre surface des saillies (301) ;
un boîtier de ventilateur (320) recevant dans celui-ci un ventilateur pour aspirer de l'air par l'intermédiaire d'une entrée d'aspiration et disposé au niveau d'une surface latérale du substrat métallique et de l'élément guide pour faire circuler l'air aspiré à travers des espaces des saillies (301) ;
une unité de refroidissement (400) pour refroidir de l'air et pour amener l'air refroidi jusqu'à l'entrée d'aspiration du boîtier de ventilateur (320) ; et
une conduite de circulation pour amener l'air déchargé d'espaces entre la pluralité de saillies (301) jusqu'à l'unité de refroidissement (400).

2. Boîtier de LED selon la revendication 1, dans lequel le ventilateur est un ventilateur tangentiel.

3. Boîtier de LED selon la revendication 1, dans lequel le substrat métallique (150) et les saillies (301) sont formés de façon intégrale.

4. Boîtier de LED selon la revendication 1, dans lequel l'élément guide (310) et les saillies (301) sont formés de façon intégrale.
